# EUROPEAN PATENT SPECIFICATION

(11) **EP 1 658 690 B1**
(45) Date of publication and mention of the grant of the patent: **06.01.2016**
(21) Application number: 04766302.6
(22) Date of filing: 23.07.2004
(51) Int. Cl.: H04H 60/46, H04H 20/40, H04H 60/91, H04W 84/04

(54) **A CELLULAR COMMUNICATION SYSTEM AND METHOD OF OPERATION THEREFOR**
ZELLULAR KOMMUNIKATIONSSYSTEM UND BEDIENUNGSMETHODE HIERFÜR
SYSTEME DE COMMUNICATION CELLULAIRE ET PROCEDE DE FONCTIONNEMENT DE CELUI-CI

(30) Priority: 28.08.2003 GB 0320048
(43) Date of publication of application: 24.05.2006
(73) Proprietor: Motorola Mobility LLC, Libertyville, IL 60048 (US)
(72) Inventor: STEPHENS, Paul, Swindon, Wiltshire SN3 4UE (GB); MATTIMOE, Denis, Douglas, Cork (IE)
(74) Representative: Boult Wade Tennant
(86) International application number: PCT/EP2004/051589
(87) International publication number: WO 2005/022789

(56) References cited:
- EP-A- 1 187 380
- WO-A-99/39466
- WO-A1-02/03728
- US-A1- 2002 013 820

## Description

### Field of the invention

The invention relates to a cellular communication system and a method of operation therefor and in particular to transmission of content for presentation to a user.

### Background of the Invention

Radio broadcasting of programmes has been widely used for many years. In conventional radio broadcasting, a continuous content signal is generated centrally by a broadcaster. The continuous content signal is broadcast over a large area by one or more radio transmitters. The radio signals can be received by radio receivers which simply demodulate the received signal to generate the content signal which is then presented to the user in a suitable way. For example, an audio signal is generated by a conventional consumer radio receiver and an audiovisual signal is generated by a Television receiver.

In conventional radio broadcast systems, a continuous real-time content signal is generated, broadcast and regenerated at the receiver. The receiver typically reproduces the instantaneously received signal and thus reproduces the content signal generated and currently transmitted by the radio broadcasters.

This approach allows for a simple and low complexity system and in particular allows for very simple and cheap receivers to be used. However, as the same broadcast signal is transmitted to all users, the content signal reproduced by all users is inherently the same. Thus, the flexibility, possibility and opportunities of providing content which specifically suits an individual or small group of users is very limited. For example, the same advertising content will be transmitted to all users thereby preventing that different user groups are provided with adverts of specific interest to them.

Conventional radio broadcast systems are typically based on analogue radio transmission but in the last decade digital radio broadcasting has become more prevalent. For example, a digital broadcast system known as DAB (Digital Audio Broadcast) has been standardised and is being rolled out in many regions including most European countries. Although DAB utilises digital techniques, the broadcast method is used is essentially the same as for analogue broadcasting in that a continuous content signal is generated and broadcast. Similarly, DAB receivers reproduce the real time content signal as it is received. Furthermore, the DAB signal is also broadcast to all users in the coverage area and thus the possibilities of customising the content are significantly limited.

Thus, although conventional radio broadcast systems provide a cheap and reliable means of distributing a content signal, the system is inherently inflexible and is significantly restricted in allowing for content to be targeted to specific individuals or groups.

In the last decades, the cellular communication systems for mobile communication have become increasingly widespread. Cellular communication systems were originally aimed exclusively at providing mobile telephone services but as the systems have matured and new enhancements and systems have been developed, they have increasingly been used for other services. However, in contrast to traditional radio broadcast systems, cellular communication systems are designed with a focus on providing communication to individual user equipment rather than broadcasts to large groups of users. Although, dedicated communication links allow content to be transmitted to user equipments, this provides for a highly inefficient and resource demanding approach to broadcasting of content as the same content must be transmitted individually to each user equipment.

Some cellular communication systems, such as the Universal Mobile Telecommunication System (UMTS), also provide some means for broadcasting of data to a multiplicity of user equipments. However, such broadcast means are generally unsuitable for broadcasting of real time continuous content signals to many users. For example, broadcast channels are typically shared between different services for example by comprising a number of time multiplexed services. Furthermore, broadcast channels are typically of limited capacity as only a small proportion of the available capacity is allocated for broadcast purposes. Furthermore, it is typically difficult to achieve the required quality of service parameters in a cellular communication system. For example, the delay resulting from communication on a broadcast channel may typically be too high and uncertain to guarantee reliable communication of a real time content signal.

Furthermore, even if a broadcast channel of a cellular communication system could be used to broadcast a real-time content signal, this would be broadcast to at least all users of a cell and therefore would tend to have the same disadvantages with respect to targeting of individuals and small groups as conventional radio broadcast systems (although possibly to a lower degree).

Accordingly an improved cellular communication system would be advantageous and in particular a cellular communication system allowing for communication of content with increased flexibility, increased performance, reduced capacity and/or increased opportunity for customising content to users would be advantageous.

### Summary of the Invention

Accordingly, the Invention seeks to preferably mitigate, alleviate or eliminate one or more of the above mentioned disadvantages singly or in any combination.

According to a first aspect of the invention there is provided a cellular communication system as recited in claim 1 of the accompanying claims.

The invention allows for a very flexible method of broadcasting content in a cellular communication system. A wide variety of different content signals can be generated from the first plurality of content items simply by modifying the first presentation indication. Hence, different presentations are possible without necessitating that a new content signal is received. The invention may further allow for a very high degree of user targeting or optimisation as a presentation of content can be customised for a single user or small group of users simply by generating and communicating an appropriate presentation indication. Thus, for example, the same group of content items may be used to generate very different presentations simply by the presentation indication comprising a selection of different subsets of the group of content items and/or a different presentation order and/or different repetition rates.

The invention may further allow for a very efficient broadcasting of content in a cellular communication system. For example, a content item need not be transmitted every time it is required to be presented. Rather if the content item, for example a popular song, is to be repeated, the presentation indication may simply refer to the same content item for every instance. A lot of broadcast content, such as radio programmes, comprise significant repetition and accordingly a significantly reduced resource consumption may be achieved.

Furthermore, the invention may allow for significantly reduced requirements for quality of service parameters of the broadcast connection used. For example, delays and interruptions in the broadcast signal will typically have no impact on the signal being presented by the user equipment as this is based on stored content items. Accordingly, the invention may allow for a significantly increased flexibility in the communication links used and may for example allow for the broadcasting to be performed so as to cause the minimum disruption to other services.

Hence the invention allows for a significantly facilitated broadcasting of content in a cellular communication system providing at least improved performance and/or relaxed communication requirements and/or reduced resource usage and/or increased flexibility.

The content items may for example include audio content items such as songs or music items, video content and/or audio visual content items. The presentation indication may for example be a programme running list comprising an indication of a sequence and/or timing of a combination of content items corresponding to a continuous real time content signal.

According to a feature of the invention, the means for transmitting is operable to transmit the plurality of content items when there is available unused capacity.

Typically, a cellular communication system is dimensioned to provide a given communication capacity which is determined from a consideration of the expected communication requirement and in particular from an expected peak requirement. However, typically communication demands vary significantly with time and in particular during a 24 hour period. Preferably, the cellular communication system comprises means for determining that the capacity of the cellular communication system is not fully utilised and the means for transmitting content items is operable to transmit the content items in response to this determination. This allows for efficient broadcasting in a cellular communication system reducing the impact on other services and reducing the requirement for additional resource to support the broadcast service.

According to another feature of the invention, the means for transmitting is operable to repeat the transmission of the first plurality of content items. The task of receiving and storing all the required content items is significantly facilitated by transmission of content items being repeated. Specifically, requirements of the user equipment to receive at specific times may be obviated thereby allowing for additional functionality in the operation and use of the user equipment.

An improved flexibility and user customisation is possible by transmitting a plurality of presentation indications. Furthermore, a significantly reduced resource requirement for communication of a plurality of different content signals is achieved as only a different presentation indication is required and the need for transmitting content for a second programme may be avoided or reduced.

The plurality of presentation indications correspond to different presentation sequences of content items of the first plurality of content items. This provides for a simple, easy to implement and/or efficient way of generating different content presentations signals.

The user equipment further comprises means for selecting the first presentation indication from the plurality of presentation indications. This allows for a suitable content presentation signal being generated which is particularly suited for the user of the user equipment. The selection means may be automatic means operable to select a presentation indication in response to a predetermined or stored selection criterion. For example, the selection criterion may be based on a user profile stored in the user equipment.

According to another feature of the invention, the means for selecting comprises user input means for receiving a presentation indication selection from a user. This provides for an easy to implement means of selection and provides a user with the option of optimising the content presentation signal for his current preferences.

According to another feature of the invention, the user equipment further comprises means for transmitting preference information associated with the selection of the first presentation indication to a network of the cellular communication system and the network comprises means for generating a user profile in response to the preference information. This allows for the network, and thus for broadcasters, to determine preferences of the user. The preference information may specifically be selection information comprising an identification of the selection made at the user equipment.

According to another feature of the invention, the means for building a user profile is operable to generate the user profile in response to user subscription information. This allows for improved user profiling and allows for other known information, such as subscriber information for the cellular communication system to be used to enhance the user profile. The selection preferences of the user may for example be combined with other known demographic details such as home address, occupation and age. Hence a more accurate user profile may be determined.

According to another feature of the invention, the network comprises means for generating a presentation indication in response to the user profile. This allows for the presentation indication to be closely aligned with the user's preferences and allows for content to be selected and ordered such as to specifically suit the user profile.

For example, a presentation indication may be generated which specifically comprises songs which are in the same category as those previously preferred by the user and/or which are typically preferred by people of that age group. Similarly, a presentation indication which comprises adverts which are specifically targeted at the user may be provided thereby allowing the broadcaster to optimise advertising revenue. For example, two programme indications may be generated which are identical except for having different advertisement content items. Depending on the user profile, the most appropriate presentation indication may be sent causing the match between adverts and users to be increased.

According to another feature of the invention, the cellular communication system further comprises means for determining a user group characteristic associated with a plurality of user equipments. This allows for a suitable categorisation of users having similar preferences and facilitates the processing, utilisation and generation of user profiles. Furthermore, it facilitates the determination of user demographics, statistics and characteristics.

According to another feature of the invention, the cellular communication system further comprises means for generating a presentation indication in response to the user group characteristic. This allows for the presentation indication to be closely aligned with user group's preferences and allows for content to be selected and ordered such as to specifically suit the user group profile. For example, a presentation indication may be generated which specifically comprises songs which are in the same category as those previously preferred by the users of the user group. Similarly, a presentation indication which comprises adverts which are specifically targeted at the user group may be provided thereby allowing the broadcaster to optimise advertising revenue. Processing of a user group may provide for simplified and less resource demanding processes than if each user is individually considered.

According to another feature of the invention, the means for determining a user group characteristic is operable to generate the user group characteristic in response to the preference information. This provides for a suitable way of generating the user group characteristic.

According to another feature of the invention, a subset of the first plurality of user content comprises advertising content. This allows for efficient and flexible broadcasting of advertising content which may be targeted at individual users or user groups.

According to another feature of the invention, the first plurality of content items comprises a first subset of content items received over one air interface link type and a second subset of content items transmitted over a second air interface link type. This allows for a high degree of flexibility as the most suitable air interface link type may be used for each content item. Specifically, the plurality of content items may comprise content items which are only used in a (possibly empty) subset of presentation indications and the air interface link type of the content items may be selected in response to the number of presentation indications in which it is comprised or depend on the number of users the presentation indication comprising the content item is intended for. Thus, this may allow for an efficient use of available air interface resource.

According to another feature of the invention, the first link type is a broadcast link type and the second link type is a narrowcast link type. A narrowcast link type is intended for fewer user equipments than a broadcast link type and typically at least five times fewer user equipments. Accordingly, this may allow for broadcasting to be used for content items required by a large group of users while narrowcast transmission is used for content items required by a small group of users. Hence, efficient air interface resource use is facilitated.

According to another feature of the invention, the narrowcast link type is a user equipment dedicated link type. This may allow for specifically high performance and low resource use for transmission of content items to a particular user equipment.

According to another feature of the invention, the content item sequence information comprises a first set of presentation indications transmitted over one air interface link type and a second set of presentation indications transmitted over a second air interface link type. This allows for a high degree of flexibility as the most suitable air interface link type may be used for each presentation indication. Specifically, this may allow for additional presentation indications to be provided by localised or dedicated means.

According to another feature of the invention, the first link type is a broadcast link type and the second link type is a narrowcast link type. A narrowcast link type is intended for fewer user equipments than a broadcast link type and typically at least five times fewer user equipments. Accordingly, this may allow for broadcasting to be used for content items required by a large group of users while narrowcast may be used for content items required by a small group of users. Hence, efficient air interface resource use is facilitated and/or flexibility in providing targeted presentation indications may be achieved.

According to another feature of the invention, the narrowcast link type is a user equipment dedicated link type. This may allow for high performance and low resource use for transmission of content items to a particular user equipment.

According to another feature of the invention, the presentation indication comprises a play list of the plurality of content items. The play list may specifically comprise a sequence order according to which content items is to be presented. This allows for an easy to use, robust and efficient presentation indication.

According to another feature of the invention, the cellular communication system further comprises means for receiving a real time presentation signal and the means for presentation is operable to present the real time presentation signal or content items in response to the first presentation indication.

This may allow for a real time presentation signal to be customised for individual users or groups of users. It thus provides an easy to implement way of providing broadcasting while allowing for customisation. For example, a programme may be transmitted in real time. The programme may comprise intervals for adverts but may not comprise any advertisement content (or may comprise a default advert). The user equipment may insert advert content items from the plurality of content items in response to a presentation indication.

According to a second aspect of the invention, there is provided a subscriber unit for a cellular communication system as recited in claim 20 of the accompanying claims.

According to another feature of the invention, the content item sequence information comprises a plurality of presentation indications and the user equipment further comprises means for selecting the first presentation indication from the plurality of presentation indications.

According to another feature of the invention, the means for selecting comprises user input means for receiving a presentation indication selection from a user. According to another feature of the invention, the subscriber unit further comprises means for transmitting preference information associated with the selection of the first presentation indication to a network of the cellular communication system.

According to a third aspect of the invention, there is provided a method of operation for a cellular communication system as recited in claim 23 of the accompanying claims.

These and other aspects, features and advantages of the invention will be apparent from and elucidated with reference to the embodiment(s) described hereinafter.

### Brief Description of the Drawings

An embodiment of the invention will be described, by way of example only, with reference to the drawings, in which
FIG. 1 illustrates elements of a cellular communication system in accordance with an embodiment of the invention; and
FIG. 2 is an illustration of a cellular communication system in accordance with a preferred embodiment of the invention.

### Detailed Description of a Preferred Embodiment of the Invention

The following description focuses on an embodiment of the invention applicable to a UMTS cellular communication system. However, it will be appreciated that the invention is not limited to this application but may be applied to many other communication systems including for example other 3^{rd} generation or 2^{nd} generation cellular communication systems such as for example General Packet Radio Service (GPRS) systems.

In a conventional cellular communication system, a geographical region is divided into a number of cells each of which is served by a base station. The base stations are interconnected by a fixed network which can communicate data between the base stations. A mobile station is served via a radio communication link by the base station of the cell within which the mobile station is situated.

A typical cellular communication system extends coverage over typically an entire country and comprises hundreds or even thousands of cells supporting thousands or even millions of mobile stations. Communication from a mobile station to a base station is known as uplink, and communication from a base station to a mobile station is known as downlink.

The fixed network interconnecting the base stations is operable to route data between any two base stations, thereby enabling a mobile station in a cell to communicate with a mobile station in any other cell. In addition, the fixed network comprises gateway functions for interconnecting to external networks such as the Public Switched Telephone Network (PSTN), thereby allowing mobile stations to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc.

Currently, 3rd generation systems are being rolled out to further enhance the communication services provided to mobile users. The most widely adopted 3rd generation communication systems are based on Code Division Multiple Access (CDMA) wherein user separation is obtained by allocating different spreading and scrambling codes to different users on the same carrier frequency. The transmissions are spread by multiplication with the allocated codes thereby causing the signal to be spread over a wide bandwidth. At the receiver, the codes are used to de-spread the received signal thereby regenerating the original signal. Each base station has a code dedicated for a pilot and broadcast signal, and as for GSM this is used for measurements of multiple cells in order to determine a serving cell. An example of a communication system using this principle is the Universal Mobile Telecommunication System (UMTS), which is currently being deployed. Further description of CDMA and specifically of the Wideband CDMA (WCDMA) mode of UMTS can be found in 'WCDMA for UMTS', Harri Holma (editor), Antti Toskala (Editor), Wiley & Sons, 2001, ISBN 0471486876

In a UMTS CDMA communication system, the communication network comprises a Core Network (CN) and a Radio Access Network (RAN). The core network is operable to route data from one part of the RAN to another, as well as interfacing with other communication systems. In addition, it performs many of the operation and management functions of a cellular communication system, such as billing. The RAN is operable to support wireless user equipment over a radio link being part of the air interface. The RAN comprises the base stations, which in UMTS are known as Node Bs, as well as Radio Network Controllers (RNC) which control the Node Bs and the communication over the air interface.

The RNC performs many of the control functions related to the air interface including radio resource management and routing of data to and from appropriate Node Bs. It further provides the interface between the RAN and the CN. An RNC and associated Node Bs is known as a Radio Network System (RNS).

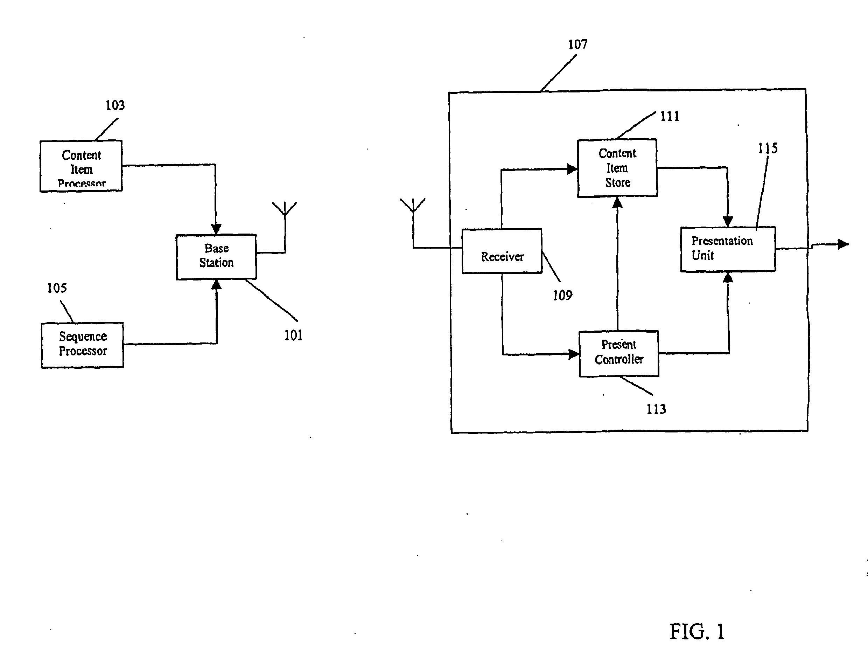

FIG. 1 illustrates elements of a cellular communication system in accordance with an embodiment of the invention. For brevity and clarity, only the elements necessary for a description of the embodiment are shown. The cellular communication system of FIG. 1 comprises a base station 101 which is operable to transmit data to a multiplicity of user equipment. Specifically, the base station 101 is operable to broadcast data to all user equipment in the coverage area of the cell.

The cellular communication system further comprises a content item processor 103 which is operable to receive or generate content item which is to be broadcast to the user equipment. The content items preferably include different content including for example different types of audio items such as music clips (music tracks), adverts, and speech clips. In the preferred embodiment, the content item processor 103 receives content item from an external source which may be a broadcasting source external to the cellular communication system. In other embodiments, the content item processor 103 may receive content items from other sources or the content items may be generated in the content item processor 103. For example, the content items may be generated by a segmentation of a received continuous content signal.

The content item processor 103 is coupled to the base station 101 such that the content items may be broadcast to the user equipments. In the described embodiment, the content items are broadcast as individual content items which may be independently processed and stored by a receiving user equipment.

The cellular communication system also comprises a sequence processor 105. The sequence processor 105 receives or generates content item sequence information relating to the content items generated by the content item processor 103. The generated sequence information comprises one or more presentation indications comprising guidelines for a timing of the presentation of the content items at the user equipments. The timing information may be absolute, such as an indication of a specific time at which a specific content item should be presented. However, preferably the timing information is a relative indication and specifically each presentation indication comprises a sequence or running order according to which some or all of the content items should be presented. Hence, preferably each presentation indication comprises a playlist which refers to some (or all) of the content items broadcast by the base station.

In the preferred embodiment, the sequence processor 105 receives the presentation indications from an external source which may be a source external to the cellular communication system. In other embodiments, the sequence processor 105 may receive presentation indications from other sources or the presentation indications may be generated in the sequence processor 105. Specifically, the source for the content items and presentation indications may be the same source and may specifically be an external broadcasting source.

The sequence processor 105 is coupled to the base station 101 such that the presentation indications may be broadcast to the user equipment. In the described embodiment, the presentation indications are broadcast as individual presentation indications which may be independently processed and stored by a receiving user equipment. In other embodiments, a plurality of presentation indications may be grouped together and broadcast in a single block.

Thus, in the described embodiment, the content item processor 103, sequence processor 105 and base station 101 are together operable to broadcast a plurality of content items and content item sequence information comprising at least a first presentation indication. The broadcast data may be received by the user equipment in the cell. FIG. 1 illustrates one such user equipment 107.

The user equipment 107 comprises a receiver 109 which is operable to receive the broadcast radio signals and to derive the plurality of content items and the sequence information therefrom. It will be appreciated that in the preferred embodiment the receiver comprises the necessary functionality for receiving broadcast signals in accordance with the specifications of the cellular communication system.

The receiver 109 is coupled to a content item store 111 wherein the received content items are stored. In addition, the receiver 109 is coupled to a presentation controller 113 which receives the at least one presentation indication from the receiver 109. The content item store 111 and the presentation controller 113 are coupled to a presentation unit 115 which is operable to present content to a user. The presentation unit 115 may be any means suitable to generate a desired presentation signal. For example, if the content is audio content, the presentation unit 115 may comprise an amplifier and loudspeaker which can generate an audio signal. If the content is visual content, the presentation unit 115 may comprise a display and means for controlling it.

In operation, the presentation controller 113 controls the content item store 111 and the presentation unit 115 in response to one of the received presentation indications. Specifically, the presentation indication may comprise a play list of a sequence of content items. The presentation controller 113 is in this embodiment operable to extract an identification of a content item from the presentation indication and to retrieve the corresponding content item from the content store and feed it to the presentation unit 115. When the current content item finishes, the presentation controller 113 extracts the next content item identified in the presentation indication from the content item store 111 and causes this to be fed to the presentation unit 115.

Thus a continuous presentation signal is generated in response to the presentation indication. The presentation signal will comprise the content items of the presentation indication in the order provided therein. Hence, a continuous real time presentation signal may be generated from the stored content item. The presentation indication may use only some of the content items received and stored and may also use some content items more than once.

For example, an audio programme may be generated by a presentation indication comprising a sequence of a number of music tracks mixed with a number of adverts. Popular music tracks and adverts may be repeated as frequently as desired simply by including multiple references in the presentation indication. As no further broadcast of the content items are required, the air interface resource usage is minimised and accordingly a very efficient broadcast system is achieved.

Furthermore, as the content items are retrieved from the content item store 111 when needed for the presentation signal, the requirements for the broadcasting of the content items are not directly linked with characteristics and requirements of the presentation signal. Hence increased resistance to variations in quality of service parameters, such as delay characteristics, are substantially reduced. Furthermore, as the timing of the broadcast of the content items need not coincide with the presentation time of the content item in the presentation signal, the communication system may time the broadcast of the content items such as to use spare capacity when this is available.

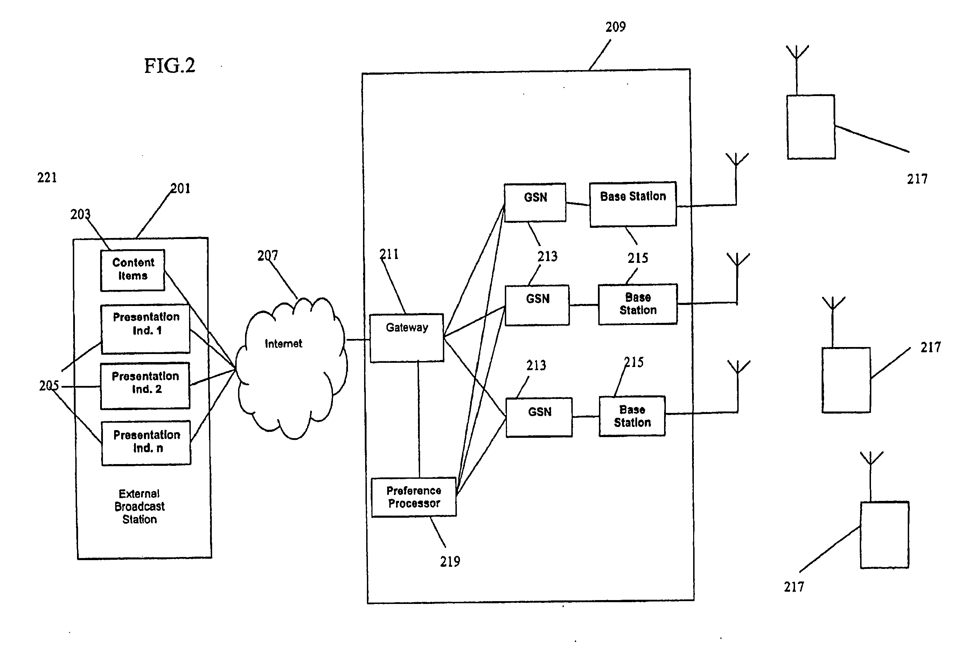

A preferred embodiment of the invention aimed at broadcasting audio programmes is described in more detail in the following. FIG. 2 illustrates a cellular communication system in accordance with the preferred embodiment of the invention.

In the preferred embodiment, content items and presentation indications are received from an external broadcast station 201 which may for example be a commercial radio station providing radio programmes funded by advertisements. The external broadcast station 201 generates a plurality of content items 203. The content items 203 comprise individual music tracks, adverts and introductory speech clips. In the preferred embodiment, the content items 203 are compressed using a suitable compression scheme, such as for example the MP3 music compression scheme.

The external broadcast station 201 furthermore generates a plurality of presentation indications. Each presentation indication 205 comprises content item references that will allow a receiver to generate an audio programme by playing the referred content items. In the preferred embodiment, each content item is identified by a specific identity number and the presentation indications 205 simply comprise a sequence of content items 203 indicating the order in which content items are to be played back. For example, using a three digit content item number an example of a presentation indication may be as simple as the following:

### PRESENTATION INDICATION 1:

ITEM 231;
ITEM 343;
ITEM 872;
ITEM 233;
ITEM 343;
ITEM 349;
...

The presentation indications may alternatively or additionally comprise absolute time information indicating the exact times at which a content item is to be presented. For example, a sample presentation indication may be as follows:

### PRESENTATION INDICATION 1:

ITEM 231: Time START / END
ITEM 343: Time START / END
ITEM 872: Time START / END
ITEM 233: Time START / END
...

Thus in the preferred embodiment, the presentation indications correspond to different presentation sequences of content items. Each presentation indication of the preferred embodiment corresponds to a specific audio programme. Thus the external broadcast station 201 generates different audio programmes using a preferably overlapping group of content items.

The external broadcast station 201 is coupled to a network 207 to which a cellular communication system 209 is also coupled. Additionally or alternatively, the network 207 and/or the external broadcast station 201 may be considered to be part of the cellular communication system 209. In the preferred embodiment, the network 207 is the Internet.

The network 207 is thus operable to communicate the content items 203 and the presentation indications 205 to a gateway network element 211 of the cellular communication system 209. Specifically, the gateway network element 211 of FIG. 2 is part of the core network and is coupled to a number of GPRS Service Nodes (GSNs) 213. The GSNs 213 are coupled to the RAN and specifically to a number of base stations 215 through RNCs (not shown). Thus, the content items 203 and the presentation indications 205 are communicated from the external broadcast station 201 through the network 207, the gateway network element 211, the GSNs 213 to the base stations 215. The content items 203 and the presentation indications 205 are broadcast to a plurality of user equipment 217 by the base stations 215. The broadcast may be in all cells, a subset of the cells or a subset of sectors of the cells.

In the preferred embodiment, the base stations 215 are individually operable to store the content items 203 and presentation indications 205 and to delay the broadcasting of these to a convenient time. Specifically, the base stations are operable to determine if there is any unused capacity and to broadcast the content items 203 and presentation indications 205 when this is the case.

In a simple embodiment, the base stations 215 simply determine the current total resource consumption, and if this is below a predetermined threshold, the content items 203 and presentation indications 205 are broadcast. If the total resource consumption is above the threshold, the broadcast is postponed until the total resource consumption falls below the threshold.

Furthermore, in the preferred embodiment the transmission of the content items 203 and alternatively or additionally the presentation indications 205 is repeated. Preferably, the repetition rate is dynamically modified to reflect the available capacity. In a simple embodiment, the content items 203 are simply broadcast when resource is available and when all content items 203 have been broadcast the base station starts transmitting the beginning of the list of content items. Thus, over time, the user equipments 217 build up a library of music tracks and advertisements such that it can respond to presentation indications without requiring complete downloads for each program.

In the preferred embodiment, the system uses spare bandwidth on the downlink to transfer both content items 203 and presentation indications 205 to the user equipments. In the preferred embodiment, this is furthermore achieved by use of packet data which allows for an efficient and flexible communication and which may efficiently utilise spare capacity. Specifically, the communication is by use of GPRS (General Packet Radio Services) techniques.

The user equipments 217 receive the broadcast information and process this to create a presentation signal. The user equipments 217 of the preferred embodiment of FIG. 1 comprise similar functional modules to those described with reference to the user equipment of FIG. 1. Specifically, the user equipment receives content items as and when this is transmitted and when the user equipment is not performing other non-compatible tasks. Specifically, during idle mode, the user equipment 217 may continuously monitor for broadcast content items 203 and presentation indications 205. When the user equipment 217 detects that a content item is transmitted, it determines if the content item has already been stored in a content item store of the user equipment. If the content item is not already stored or corresponds to an updated version of the stored content item, the user equipment 217 proceeds to receive and store the content item. Thus, after a variable time, the user equipment 217 will build up a content item store comprising most or all of the content items that are referenced by the presentation indications 205.

Additionally, the user equipment 217 monitors for broadcasts of presentation indications 205. The user equipment 217 is furthermore operable to generate a presentation signal in response to the presentation indications 205. In the preferred embodiment, the user equipment 217 comprises a selection processor which selects a first presentation indication from the plurality of presentation indications 205. In the preferred embodiment, the first presentation indication thus corresponds to a preferred programme.

In the preferred embodiment, the presentation indications 205 comprise additional information associated with the programme of the presentation indications. For example, information may be included identifying a predominant genre, type and target group of the presentation indication. For example, one presentation indication may comprise information identifying the programme to be aimed at the age group from 18-25 and predominantly comprise the current chart music. Another programme may comprise information identifying the programme to be aimed at the age group from 25 to 35 years and mainly comprise popular music and discussions relating to current affairs. The selection processor may be capable of automatically selecting a programme in response to a selection criterion and the provided information. For example, the selection processor may comprise information of the age of the user and automatically select the presentation indication corresponding thereto.

In the preferred embodiment, the user equipment 217 additionally or alternatively comprises means for displaying information related to the presentation indications 205 to the user. Thus, the user may be provided with a listing of the characteristics of programmes that are available to be presented. The user equipment 217 comprises a user input which receives a selection of a preferred programme from a user. In response, the user equipment selects the corresponding presentation indication 205 and proceeds to generate the presentation signal.

As a specific example, if the presentation indication 205 selected corresponds to presentation indication 1 illustrated above, the user equipment 217 proceeds to determine if item 231 is currently stored in the content item store. If so, it retrieves the content item and proceeds to present it. For example, content item 231 may correspond to a speaker introducing the programme. After content item 231 has been presented, the user equipment 217 proceeds to determine if item 343 is currently stored in the content item store and if so retrieves and presents it. For example, item 343 may be a first music track which is played to the user. The user equipment 217 then proceeds to present the content items referred to in the presentation indication in the order given therein. The content items are preferably combinations of speech, music tracks and adverts resulting in a programme similar to conventional radio programmes.

If a referred content item is not available in the content store, the user equipment 217 may for example skip directly to the next content item, present a standard message indicating that the content item is missing and then skip to the next content item or play an alternative content item instead.

The user equipment of the preferred embodiment furthermore comprises means for transmitting preference information associated with the selection of the first presentation indication back to the base station. The preference information may directly comprise information of which presentation indication has been selected by the user. Alternatively or additionally, the user equipment may generate user preference indications in response to the selection of the presentation indication as well as other parameters which may be automatically detected or manually set.

The network of the cellular communication system 209 thus receives information related to the preference of an individual user. In the preferred embodiment, preference information is received from a large group of users. The preference information is communicated to a preference processor 219.

The preference processor 219 is operable to generate a user profile in response to the preference information. In the preferred embodiment, the preference processor 219 generates a user profile for each individual user and is further operable to generate user group characteristics for different groups of users.

Thus the preference processor 219 allows for the preferences and characteristics of the individual user to be determined and stored. For example, the preference processor 219 may simply use the characteristics of the presentation indications selected by the user to determine a preferred genre, style, age group, or type of programme preferred by the user. For example, the user may determine that a user prefers programmes comprising chart music with none or little speech, that another user prefers popular music with medium amounts of speech while a third user prefers speech only programmes.

The preference processor 219 may also determine characteristics associated with a plurality of user equipment 217. In one embodiment, the preference processor 219 may generate characteristics of the entire user community. For example, the number of users selecting each presentation indication may be determined and thus the broadcaster may continuously be updated with information related to user preferences. For example, whenever a user equipment selects a presentation indication, a profile of the user community may be updated. This may enable the network operator to build an accurate profile of the total user group.

Specifically, this may allow the preference processor 219 to determine and measure e.g. precise listener or viewer figures for individual programme indications or even individual content items. This may allow a broadcaster to be provided with accurate and current ratings for individual programmes or even individual clips. This information may be used to modify the current programmes and content to increase the appeal to potential listeners and viewers, which again may be used by a broadcaster to increase advertising revenue.

In the preferred embodiment, the preference processor 219 further generates the user profiles and/or the user group characteristics in response to additional information. Specifically, the subscriber information which is maintained by the cellular communication system is included to generate the user profile and user group characteristics. For example, the preference processor 219 may include information related to an address of the user, an age of the user etc.

In the preferred embodiment, one or more presentation indications are generated in response to the user profiles or the group characteristics. Specifically, a presentation indication may be generated by modifying an existing presentation indication to more closely correspond to the preferences of a specific user or a user group. This allows for the programmes to be very closely matched to the preferences and characteristics of the individual users.

For example, adverts may be selected to specifically suit a user. As another example, the programmes corresponding to the presentation indications may be selected to specifically suit a given user for example by selecting music tracks which according to the user profile are likely to be enjoyed.

Furthermore, general presentation indications broadcast to a group of users can be generated (e.g. by modifying existing presentation indications) to optimise the general preference of users thereby potentially attracting a larger group of users. Hence, the embodiment may allow for a flexible presentation signal to be communicated which may be optimised to achieve a high acceptance and/or suitability and/or specific targeting. The embodiment may for example achieve increased user take up and increased advertising revenue.

In the preferred embodiment, the content items and presentation indications are all transmitted through the same broadcast means. However, in some embodiments, different air interface link types may be used for transmitting different content items and/or different presentation indications to the user equipment. Specifically, content items may be communicated to the user equipment depending on the number of user equipment that it needs to be communicated to.

In one such embodiment, content items and presentation indications which are intended for more than a given number of user equipments is transmitted using a broadcast channel. However as the available capacity in broadcast channels typically are limited in cellular communication systems, it is inefficient to use these channels to transmit content items or presentation indications which are only intended for a few or even one user. Accordingly, content items and presentation indications which are intended for less than the given number of users are transmitted by a narrowcast link type rather than using the broadcast channel. The narrowcast link type may be a channel shared between a group of users but in the preferred embodiment, content items and/or presentation indications which are intended for less than e.g. five user equipments are transmitted individually to each user equipment using a dedicated link type. The dedicated link type may for example be a circuit switched link or a dedicated packet channel.

This approach may thus allow for a specific advert targeted directly to an individual to be included in a broadcast programme while at the same time ensuring an efficient use of air interface resource.

In some embodiments, the cellular communication system may furthermore provide time synchronisation to the user equipment. This time synchronisation information may be used to ensure that the content items of a programme indication are synchronised. For example, the cellular communication system may continuously broadcast a real time play time indication, and the information of the programme indications may relate the play time of individual content items to this real time play time indication.

In some embodiments, the presentation indications do not correspond to a continuous real time presentation signal but corresponds to distinct and separate time intervals. For example, a presentation indication may indicate that a content item should be presented in a given time interval, that two content items should be presented consecutively in another distinct time interval etc. The time indications may for example be relative time indications or absolute time indications. For example, the presentation indications may indicate that a specific content item should be presented at a specific absolute time instant. As another example, the presentation indication may indicate that a specific content item should be presented a given time duration after a given event has occurred. For example, the event may be a start of a programme and the time indication may be that a given content item should be presented 30 minutes after the start of the programme.

In one embodiment where this may be particularly advantageous, the user equipment further comprises means for receiving a real time presentation signal. The real time presentation signal may be a signal broadcast by the cellular communication system or may even be a real time presentation signal not associated with the cellular communication system such as a conventional radio programme. In the embodiment, the presentation unit of the user equipment is operable to present both content items and the real time presentation signal. In the specific embodiment, the presentation unit automatically selects between the real time presentation signal and the content items in response to the presentation indication. Specifically, content items are presented in intervals indicated in the discontinuous presentation indication and the real time presentation signal is presented in other intervals.

This allows for a high degree of flexibility and allows a real time signal to be customised to specific users without requiring different programmes to be broadcast. For example, the real time presentation signal may be a conventional radio programme having different advertising blocks inserted. The timing of these advertising blocks may be well known and by specifying the advertising intervals in the presentation indication, the advertising of the radio programme may be replaced by content items received from the cellular communication system. This specifically allows for a broadcaster to broadcast a radio programme while at the same time providing targeted advertising through the use of a cellular communication system.

The invention can be implemented in any suitable form including hardware, software, firmware or any combination of these. However, preferably, the invention is implemented as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with the preferred embodiment, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

## Claims

1. A cellular communication system comprising:
means (101) for transmitting a first plurality of content items to at least one user equipment;
means (101) for transmitting content item sequence information comprising a plurality of presentation indications wherein each presentation indication corresponds to a different presentation sequences of content items of the first plurality of content items;
the at least one user equipment comprising:
means (109) for receiving the first plurality of content items;
means (111) for storing the first plurality of content items;
means (109) for receiving the content item sequence information;
means for selecting a first presentation indication from the plurality of presentation indications based on a user profile of a user of the user equipment, wherein the first presentation indication corresponds to a second plurality of content items that form a subset of the first plurality of content items;
means (113) for retrieving the second plurality of content items from the means for storing in response to the first presentation indication; and
means (113), (115) for presenting the second plurality of content items in response to the first presentation indication.

2. A cellular communication system as claimed in claim 1 wherein the means for transmitting is operable to transmit the plurality of content items when there is available unused capacity.

3. A cellular communication system as claimed in any previous claim wherein the means for transmitting is operable to repeat the transmission of the first plurality of content items.

4. A cellular communication system as claimed in any previous claim wherein the means for selecting comprises user input means for receiving a presentation indication selection from a user.

5. A cellular communication system as claimed in claim 1 wherein the user equipment further comprises means for transmitting preference information associated with the selection of the first presentation indication to a network of the cellular communication system and the network comprises means for generating a user profile in response to the preference information.

6. A cellular communication system as claimed in claim 5 wherein the means for generating a user profile is operable to generate the user profile in response to user subscription information.

7. A cellular communication system as claimed in claim 5 or 6 wherein the network comprises means for generating a presentation indication in response to the user profile.

8. A cellular communication system as claimed in any previous claim further comprising means for determining a user group characteristic associated with a plurality of user equipments.

9. A cellular communication system as claimed in claim 8 further comprising means for generating a presentation indication in response to the user group characteristic.

10. A cellular communication system as claimed in claim 8 or 9 as dependent on any of the claims 5 to 7 wherein the means for determining a user group characteristic is operable to generate the user group characteristic in response to the preference information.

11. A cellular communication system as claimed in any previous claim wherein a subset of the first plurality of user content comprises advertising content items.

12. A cellular communication system as claimed in any previous claim wherein the first plurality of content items comprises a first subset of content items transmitted over one air interface link type and a second subset of content items transmitted over a second air interface link type.

13. A cellular communication system as claimed in claim 12 wherein the first link type is a broadcast link type and the second link type is a narrowcast link type.

14. A cellular communication system as claimed in claim 13 wherein the narrowcast link type is a user equipment dedicated link type.

15. A cellular communication system as claimed in any previous claim wherein the content item sequence information comprises a first set of presentation indications transmitted over one air interface link type and a second set of presentation indications transmitted over a second air interface link type.

16. A cellular communication system as claimed in claim 15 wherein the first link type is a broadcast link type and the second link type is a narrowcast link type.

17. A cellular communication system as claimed in claim 16 wherein the narrowcast link type is a user equipment dedicated link type.

18. A cellular communication system as claimed in any previous claim wherein the presentation indication comprises a play list of the plurality of content items.

19. A cellular communication system as claimed in any previous claim further comprising means for receiving a real time presentation signal and wherein the means for presenting is operable to present the real time presentation signal or content items in response to the first presentation indication.

20. A subscriber unit for a cellular communication system comprising:
means (109) for receiving a first plurality of content items over an air interface of the cellular communication system;
means (111) for storing the first plurality of content items;
means (109) for receiving content item sequence information comprising a plurality of presentation indications wherein each presentation indication corresponds to a different presentation sequence of content items of the first plurality of content items;
means for selecting a first presentation indication from the plurality of presentation indications based on a user profile of a user of the subscriber unit, wherein the first presentation indication corresponds to a second plurality of content items that form a subset of the first plurality of content items;
means (113) for retrieving the second plurality of content items from the means for storing in response to the first presentation indication; and
means (113, 115) for presenting the retrieved plurality of content items in response to the first presentation indication.

21. A subscriber unit as claimed in claim 20 wherein the means for selecting comprises user input means for receiving a presentation indication selection from a user.

22. A subscriber unit as claimed in claim 20 or 21 further comprising means for transmitting preference information associated with the selection of the first presentation indication to a network of the cellular communication system.

23. A method of operation for a cellular communication system comprising the steps of:
transmitting a first plurality of content items to at least one user equipment;
transmitting content item sequence information comprising a plurality of presentation indications wherein each presentation indication corresponds to a different presentation sequence of content items of the first plurality of content items;
and at least one user equipment further performing the steps of:
receiving the first plurality of content items;
storing the first plurality of content items;
receiving the content item sequence information;
selecting a first presentation indication from the plurality of presentation indications based on a user profile of a user of the user equipment, wherein the first presentation indication corresponds to a second plurality of content items that form a subset of the first plurality of content items;
retrieving the second plurality of content items from the means for storing in response to the first presentation indication; and
presenting the second plurality of content items in response to the first presentation indication.

## Patentansprüche

1. Zellulares Kommunikationssystem, das Folgendes aufweist:
ein Mittel (101) zum Übertragen einer ersten Mehrzahl von Inhaltselementen an wenigstens eine Benutzereinrichtung;
ein Mittel (101) zum Übertragen von Inhaltselement-Sequenzinformationen, die eine Mehrzahl von Präsentationsangaben aufweisen, wobei jede Präsentationsangabe einer anderen Präsentationssequenz von Inhaltselementen der ersten Mehrzahl von Inhaltselementen entspricht;
wobei die wenigstens eine Benutzereinrichtung Folgendes aufweist:
ein Mittel (109) zum Empfangen der ersten Mehrzahl von Inhaltselementen;
ein Mittel (111) zum Speichern der ersten Mehrzahl von Inhaltselementen;
ein Mittel (109) zum Empfangen der Inhaltselement-Sequenzinformationen;
ein Mittel zum Auswählen einer ersten Präsentationsangabe aus der Mehrzahl von Präsentationsangaben basierend auf einem Nutzerprofil eines Nutzers der Benutzereinrichtung, wobei die erste Präsentationsangabe einer zweiten Mehrzahl von Inhaltselementen entspricht, die einen Teilsatz der ersten Mehrzahl von Inhaltselementen bilden;
ein Mittel (113) zum Abrufen der zweiten Mehrzahl von Inhaltselementen aus dem Mittel zum Speichern ansprechend auf die erste Präsentationsangabe; und
ein Mittel (113), (115) zum Präsentieren der zweiten Mehrzahl von Inhaltselementen ansprechend auf die erste Präsentationsangabe.

2. Zellulares Kommunikationssystem nach Anspruch 1, wobei das Mittel zum Übertragen dazu operierbar ist, die Mehrzahl von Inhaltselementen zu übertragen, wenn es verfügbare ungenutzte Kapazitäten gibt.

3. Zellulares Kommunikationssystem nach einem der vorhergehenden Ansprüche, wobei das Mittel zum Übertragen dazu operierbar ist, die Übertragung der ersten Mehrzahl von Inhaltselementen zu wiederholen.

4. Zellulares Kommunikationssystem nach einem der vorhergehenden Ansprüche, wobei das Mittel zum Auswählen ein Nutzereingabemittel zum Empfangen einer Präsentationsangabeauswahl von einem Nutzer aufweist.

5. Zellulares Kommunikationssystem nach Anspruch 1, wobei die Benutzereinrichtung ferner ein Mittel zum Übertragen von Präferenzinformationen, die der Auswahl der ersten Präsentationsangabe zugehörig sind, an ein Netz des zellularen Kommunikationssystems aufweist und das Netz ein Mittel zum Erzeugen eines Nutzerprofils ansprechend auf die Präferenzinformationen aufweist.

6. Zellulares Kommunikationssystem nach Anspruch 5, wobei das Mittel zum Erzeugen eines Nutzerprofils dazu operierbar ist, das Nutzerprofil ansprechend auf Nutzer-Subskriptionsinformationen zu erzeugen.

7. Zellulares Kommunikationssystem nach Anspruch 5 oder 6, wobei das Netz ein Mittel zum Erzeugen einer Präsentationsangabe ansprechend auf das Nutzerprofil aufweist.

8. Zellulares Kommunikationssystem nach einem der vorhergehenden Ansprüche, das ferner ein Mittel zum Bestimmen einer Nutzergruppencharakteristik aufweist, die einer Mehrzahl von Benutzereinrichtungen zugehörig ist.

9. Zellulares Kommunikationssystem nach Anspruch 8, das ferner ein Mittel zum Erzeugen einer Präsentationsangabe ansprechend auf die Nutzergruppencharakteristik aufweist.

10. Zellulares Kommunikationssystem nach Anspruch 8 oder 9, in Abhängigkeit von einem der Ansprüche 5 bis 7, wobei das Mittel zum Bestimmen einer Nutzergruppencharakteristik dazu operierbar ist, die Nutzergruppencharakteristik ansprechend auf die Präferenzinformationen zu erzeugen.

11. Zellulares Kommunikationssystems nach einem der vorhergehenden Ansprüche, wobei ein Teilsatz der ersten Mehrzahl von Nutzerinhalt ein Werben für Inhaltselemente aufweist.

12. Zellulares Kommunikationssystem nach einem der vorhergehenden Ansprüche, wobei die erste Mehrzahl von Inhaltselementen einen ersten Teilsatz von Inhaltselementen, die über eine Luft-Schnittstellenverbindungsart übertragen werden, und einen zweiten Teilsatz von Inhaltselementen aufweist, die über eine zweite Luft-Schnittstellenverbindungsart übertragen werden.

13. Zellulares Kommunikationssystem nach Anspruch 12, wobei die erste Verbindungsart eine Broadcast-Verbindungsart ist und die zweite Verbindungsart eine Narrowcast-Verbindungsart ist.

14. Zellulares Kommunikationssystem nach Anspruch 13, wobei die Narrowcast-Verbindungsart eine Verbindungsart ist, die einer Benutzereinrichtung gewidmet ist.

15. Zellulares Kommunikationssystem nach einem der vorhergehenden Ansprüche, wobei die Inhaltselement-Sequenzinformationen einen ersten Satz von Präsentationsangaben, die über eine Luft-Schnittstellenverbindungsart übertragen werden, und einen zweiten Satz von Präsentationsangaben, die über eine zweite Luft-Schnittstellenverbindungsart übertragen werden, aufweisen.

16. Zellulares Kommunikationssystem nach Anspruch 15, wobei die erste Verbindungsart eine Broadcast-Verbindungsart ist und die zweite Verbindungsart eine Narrowcast-Verbindungsart ist.

17. Zellulares Kommunikationssystem nach Anspruch 16, wobei die Narrowcast-Verbindungsart eine Verbindungsart ist, die einer Benutzereinrichtung gewidmet ist.

18. Zellulares Kommunikationssystem nach einem der vorhergehenden Ansprüche, wobei die Präsentationsangabe eine Wiedergabeliste der Mehrzahl von Inhaltselementen aufweist.

19. Zellulares Kommunikationssystem nach einem der vorhergehenden Ansprüche, das ferner ein Mittel zum Empfangen eines Echtzeit-Präsentationssignals aufweist und wobei das Mittel zum Präsentieren dazu operierbar ist, das Echtzeit-Präsentationssignal oder Inhaltselemente ansprechend auf die erste Präsentationsangabe zu repräsentieren.

20. Teilnehmereinheit für ein zellulares Kommunikationssystem, die Folgendes aufweist:
ein Mittel (109) zum Empfangen einer ersten Mehrzahl von Inhaltselementen über eine Luft-Schnittstelle des zellularen Kommunikationssystems;
ein Mittel (111) zum Speichern der ersten Mehrzahl von Inhaltselementen;
ein Mittel (109) zum Empfangen von Inhaltselement-Sequenzinformationen, die eine Mehrzahl von Präsentationsangaben aufweisen, wobei jede Präsentationsangabe einer anderen Präsentationssequenz von Inhaltselementen der ersten Mehrzahl von Inhaltselementen entspricht;
ein Mittel zum Auswählen einer ersten Präsentationsangabe aus der Mehrzahl von Präsentationsangaben basierend auf einem Nutzerprofil eines Nutzers der Teilnehmereinheit, wobei die erste Präsentationsangabe einer zweiten Mehrzahl von Inhaltselementen entspricht, die einen Teilsatz der ersten Mehrzahl von Inhaltselementen bilden;
ein Mittel (113) zum Abrufen der zweiten Mehrzahl von Inhaltselementen aus dem Mittel zum Speichern ansprechend auf die erste Präsentationsangabe; und
ein Mittel (113), (115) zum Präsentieren der abgerufenen Mehrzahl von Inhaltselementen ansprechend auf die erste Präsentationsangabe.

21. Teilnehmereinheit nach Anspruch 20, wobei das Mittel zum Auswählen ein Nutzereingabemittel zum Empfangen einer Präsentationsangabeauswahl von einem Nutzer aufweist.

22. Teilnehmereinheit nach Anspruch 20 oder 21, die ferner ein Mittel zum Übertragen von Präferenzinformationen, die der Auswahl der ersten Präsentationsangabe zugehörig sind, an ein Netz des zellularen Kommunikationssystems aufweist.

23. Betriebsverfahren für ein zellulares Kommunikationssystem, das die folgenden Schritte aufweist:
Übertragen einer ersten Mehrzahl von Inhaltselementen an wenigstens eine Benutzereinrichtung;
Übertragen von Inhaltselement-Sequenzinformationen, die eine Mehrzahl von Präsentationsangaben aufweisen, wobei jede Präsentationsangabe einer anderen Präsentationssequenz von Inhaltselementen der ersten Mehrzahl von Inhaltselementen entspricht;
und wobei wenigstens eine Benutzereinrichtung ferner die folgenden Schritte ausführt:
Empfangen der ersten Mehrzahl von Inhaltselementen;
Speichern der ersten Mehrzahl von Inhaltselementen;
Empfangen der Inhaltselement-Sequenzinformationen;
Auswählen einer ersten Präsentationsangabe aus der Mehrzahl von Präsentationsangaben basierend auf einem Nutzerprofil eines Nutzers der Benutzereinrichtung, wobei die erste Präsentationsangabe einer zweiten Mehrzahl von Inhaltselementen entspricht, die einen Teilsatz der ersten Mehrzahl von Inhaltselementen bilden;
Abrufen der zweiten Mehrzahl von Inhaltselementen aus dem Mittel zum Speichern ansprechend auf die erste Präsentationsangabe; und
Präsentieren der zweiten Mehrzahl von Inhaltselementen ansprechend auf die erste Präsentationsangabe.

## Revendications

1. Système de communication cellulaire, comprenant :
un moyen (101) pour transmettre une première pluralité d'éléments de contenu à au moins un équipement d'utilisateur ;
un moyen (101) pour transmettre des informations de séquences d'éléments de contenu comprenant une pluralité d'indications de présentation, dans lequel chaque indication de présentation correspond à une différente séquence de présentation d'éléments de contenu de la première pluralité d'éléments de contenu ;
ledit au moins un équipement d'utilisateur comprenant :
un moyen (109) pour recevoir la première pluralité d'éléments de contenu ;
un moyen (111) pour stocker la première pluralité d'éléments de contenu ;
un moyen (109) pour recevoir les informations de séquences d'éléments de contenu ;
un moyen pour sélectionner une première indication de présentation à partir de la pluralité d'indications de présentation sur la base d'un profil d'utilisateur d'un utilisateur de l'équipement d'utilisateur, dans lequel la première indication de présentation correspond à une seconde pluralité d'éléments de contenu qui forment un sous-ensemble de la première pluralité d'éléments de contenu ;
un moyen (113) pour extraire la seconde pluralité d'éléments de contenu du moyen de stockage, en réponse à la première indication de présentation ; et
un moyen (113), (115) pour présenter la seconde pluralité d'éléments de contenu en réponse à la première indication de présentation.

2. Système de communication cellulaire selon la revendication 1, dans lequel le moyen de transmission est exploitable de manière à transmettre la pluralité d'éléments de contenu lorsqu'il existe une capacité inutilisée disponible.

3. Système de communication cellulaire selon l'une quelconque des revendications précédentes, dans lequel le moyen de transmission est exploitable de manière à répéter la transmission de la première pluralité d'éléments de contenu.

4. Système de communication cellulaire selon l'une quelconque des revendications précédentes, dans lequel le moyen de sélection comporte un moyen d'entrée d'utilisateur pour recevoir une sélection d'indication de présentation en provenance d'un utilisateur.

5. Système de communication cellulaire selon la revendication 1, dans lequel l'équipement d'utilisateur comprend en outre un moyen pour transmettre des informations de préférence, associées à la sélection de la première indication de présentation, à un réseau du système de communication cellulaire, et dans lequel le réseau comprend un moyen pour générer un profil d'utilisateur en réponse aux informations de préférence.

6. Système de communication cellulaire selon la revendication 5, dans lequel le moyen pour générer un profil d'utilisateur est exploitable de manière à générer le profil d'utilisateur en réponse à des informations d'abonnement d'utilisateur.

7. Système de communication cellulaire selon la revendication 5 ou 6, dans lequel le réseau comprend un moyen pour générer une indication de présentation en réponse au profil d'utilisateur.

8. Système de communication cellulaire selon l'une quelconque des revendications précédentes, comprenant en outre un moyen pour déterminer une caractéristique de groupe d'utilisateurs associée à une pluralité d'équipements d'utilisateur.

9. Système de communication cellulaire selon la revendication 8, comprenant en outre un moyen pour générer une indication de présentation en réponse à la caractéristique de groupe d'utilisateurs.

10. Système de communication cellulaire selon la revendication 8 ou 9, lorsqu'elle dépend de l'une quelconque des revendications 5 à 7, dans lequel le moyen pour déterminer une caractéristique de groupe d'utilisateurs est exploitable de manière à générer la caractéristique de groupe d'utilisateurs en réponse aux informations de préférence.

11. Système de communication cellulaire selon l'une quelconque des revendications précédentes, dans lequel un sous-ensemble de la première pluralité de contenus d'utilisateur comprend des éléments de contenu publicitaire.

12. Système de communication cellulaire selon l'une quelconque des revendications précédentes, dans lequel la première pluralité d'éléments de contenu comprend un premier sous-ensemble d'éléments de contenu transmis sur un type de liaison d'interface radio et un second sous-ensemble d'éléments de contenu transmis sur un second type de liaison d'interface radio.

13. Système de communication cellulaire selon la revendication 12, dans lequel le premier type de liaison est un type de liaison de diffusion générale et le second type de liaison est un type de liaison de diffusion ciblée.

14. Système de communication cellulaire selon la revendication 13, dans lequel le type de liaison de diffusion ciblée est un type de liaison dédiée d'équipement d'utilisateur.

15. Système de communication cellulaire selon l'une quelconque des revendications précédentes, dans lequel les informations de séquences d'éléments de contenu comportent un premier ensemble d'indications de présentation transmis sur un type de liaison d'interface radio, et un second ensemble d'indications de présentation transmis sur un second type de liaison d'interface radio.

16. Système de communication cellulaire selon la revendication 15, dans lequel le premier type de liaison est un type de liaison de diffusion générale et le second type de liaison est un type de liaison de diffusion ciblée.

17. Système de communication cellulaire selon la revendication 16, dans lequel le type de liaison de diffusion ciblée est un type de liaison dédiée d'équipement d'utilisateur.

18. Système de communication cellulaire selon l'une quelconque des revendications précédentes, dans lequel l'indication de présentation comprend une liste de lecture de la pluralité d'éléments de contenu.

19. Système de communication cellulaire selon l'une quelconque des revendications précédentes, comprenant en outre un moyen pour recevoir un signal de présentation en temps réel, et dans lequel le moyen de présentation est exploitable de manière à présenter le signal de présentation en temps réel ou des éléments de contenu en réponse à la première indication de présentation.

20. Unité d'abonné pour un système de communication cellulaire, comprenant :
un moyen (109) pour recevoir une première pluralité d'éléments de contenu sur une interface radio du système de communication cellulaire ;
un moyen (111) pour stocker la première pluralité d'éléments de contenu ;
un moyen (109) pour recevoir des informations de séquences d'éléments de contenu comprenant une pluralité d'indications de présentation, dans laquelle chaque indication de présentation correspond à une différente séquence de présentation d'éléments de contenu de la première pluralité d'éléments de contenu ;
un moyen pour sélectionner une première indication de présentation à partir de la pluralité d'indications de présentation, sur la base d'un profil d'utilisateur d'un utilisateur de l'unité d'abonné, dans laquelle la première indication de présentation correspond à une seconde pluralité d'éléments de contenu qui forment un sous-ensemble de la première pluralité d'éléments de contenu ;
un moyen (113) pour extraire la seconde pluralité d'éléments de contenu du moyen de stockage en réponse à la première indication de présentation ; et
un moyen (113, 115) pour présenter la pluralité extraire d'éléments de contenu en réponse à la première indication de présentation.

21. Unité d'abonné selon la revendication 20, dans laquelle le moyen de sélection comprend un moyen d'entrée d'utilisateur pour recevoir une sélection d'indication de présentation en provenance d'un utilisateur.

22. Unité d'abonné selon la revendication 20 ou 21, comprenant en outre un moyen pour transmettre des informations de préférence, associées à la sélection de la première indication de présentation, à un réseau du système de communication cellulaire.

23. Procédé d'exploitation pour un système de communication cellulaire comprenant les étapes ci-dessous consistant à :
transmettre une première pluralité d'éléments de contenu à au moins un équipement d'utilisateur ;
transmettre des informations de séquences d'éléments de contenu comprenant une pluralité d'indications de présentation, dans lequel chaque indication de présentation correspond à une différente séquence de présentation d'éléments de contenu de la première pluralité d'éléments de contenu ; et
dans lequel au moins un équipement d'utilisateur met en oeuvre les étapes ci-dessous consistant à :
recevoir la première pluralité d'éléments de contenu ;
stocker la première pluralité d'éléments de contenu ;
recevoir les informations de séquences d'éléments de contenu ;
sélectionner une première indication de présentation à partir de la pluralité d'indications de présentation sur la base d'un profil d'utilisateur d'un utilisateur de l'équipement d'utilisateur, dans lequel la première indication de présentation correspond à une seconde pluralité d'éléments de contenu qui forment un sous-ensemble de la première pluralité d'éléments de contenu ;
extraire la seconde pluralité d'éléments de contenu du moyen de stockage, en réponse à la première indication de présentation ; et
présenter la seconde pluralité d'éléments de contenu en réponse à la première indication de présentation.
